Europäisches Patentamt

European Patent Office

Office européen des brevets

(19)

(11) Publication number: **0 305 569**
**A1**

# EUROPEAN PATENT APPLICATION

(21) Application number: 87112802.1

(22) Date of filing: 02.09.87

(51) Int. Cl.4: **H02K 1/16 , H02K 19/06**

(43) Date of publication of application:
**08.03.89 Bulletin 89/10**

(84) Designated Contracting States:
**AT BE CH DE ES GB GR IT LI LU NL SE**

(71) Applicant: **Stanley, Louis**
**Taglieberstrasse 6/7/8**
**1230 Wien 23(AT)**

(72) Inventor: **Stanley, Louis**
**Taglieberstrasse 6/7/8**
**1230 Wien 23(AT)**

(74) Representative: **Sunderland, James Harry et al**
**HASELTINE LAKE PARTNERS Motorama**
**Haus 502 Rosenheimer Strasse 30**
**D-8000 München 80(DE)**

(54) **Electrical machines.**

(57) A wound-strip magnet core (10) for an electrical
machine, comprising a helically wound coil of metal
strip, characterised in that the core has an endless
slot (12) extending continuously around the axis of
the core.

Fig. 4.

## Electrical machines

The present invention relates to electrical machines, and concerns particularly wound-strip cores for such machines.

It has been proposed to form a core for an axial flux motor by coiling strip which has punched-out openings such that in the wound coil openings in the strip, in successive turns of the coil, register to provide slots in the core extending radially of the core. In the completed motor, the radial slots in the core accommodate radially extending arms of field windings.

According to the present invention there is provided a wound-strip magnet core for an electrical machine, comprising a helically wound coil of metal strip, characterised in that the core has an endless slot extending continuously around the axis of the core.

The core may also have generally radially extending slots.

A wound-strip core embodying the present invention can, for example, be used as the stator core of a motor and can carry coil windings for different motor configurations, for example two-pole and sixteen pole, so that advantage can be taken of desirable characteristics of each configuration (e.g. high synchronous speed, better starting torque) in a single motor.

Wound-strip cores embodying the present invention can also find many other applications in electrical machines, their ability to carry a number of different coil winding configurations, of different characteristics or functions, offering many possibilities.

Reference is made, by way of example, to the accompanying schematic drawings, in which :-

Figs. 1 and 2 are respectively a side view and a plan view illustrating a previously proposed wound-strip core for a stator of an axial flux motor;

Fig. 3 illustrates part of the length of the strip from which the core of Figs. 1 and 2 is wound;

Fig. 4 is a plan view of a wound-strip core embodying the present invention;

Fig. 5 is a side view of the core of Fig. 4;

Fig. 6 and 7 are plan views of respective further cores embodying the present invention, with coils illustrated in place;

Fig. 8 is a plan view of a rotor for a machine using a core embodying the present invention;

Fig. 9 is a sectional view of an alternator employing a stator core embodying the present invention;

Fig. 10 is a plan view of the stator core for use in an alternator as shown in Fig. 9, with coils illustrated in place;

Fig 11 (a) is a plan view of a rotor for use in an alternator as shown in Fig. 9, Figs. 11 (b) and (c) are sectional views taken along line B-B and C-C of Fig. 11 (a);

Fig. 12 is a sectional view showing one axis-symmetrical half of a machine, using a core embodying the present invention, providing motor and generator functions;

Fig. 13 is a plan view of a rotor of an induction machine using a core embodying the present invention;

Fig. 14 is a plan view illustrating fan blades which may be formed on a rotor of a machine using a core embodying the present invention;

Fig. 15 illustrates schematically a winding configuration for a stator of an alternator employing a core in accordance with an embodiment of the present invention, and

Figs. 16 and 17 illustrate further electrical machines employing magnet cores in accordance with embodiments of the present invention.

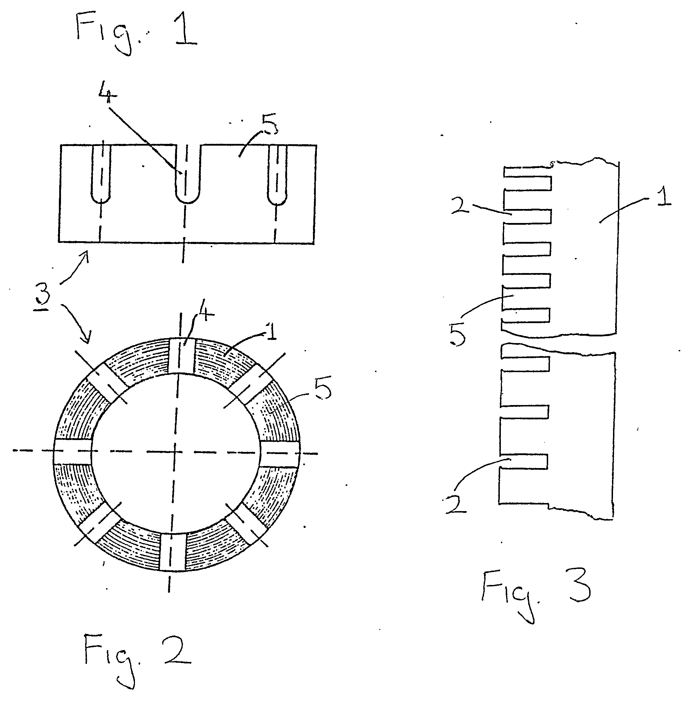

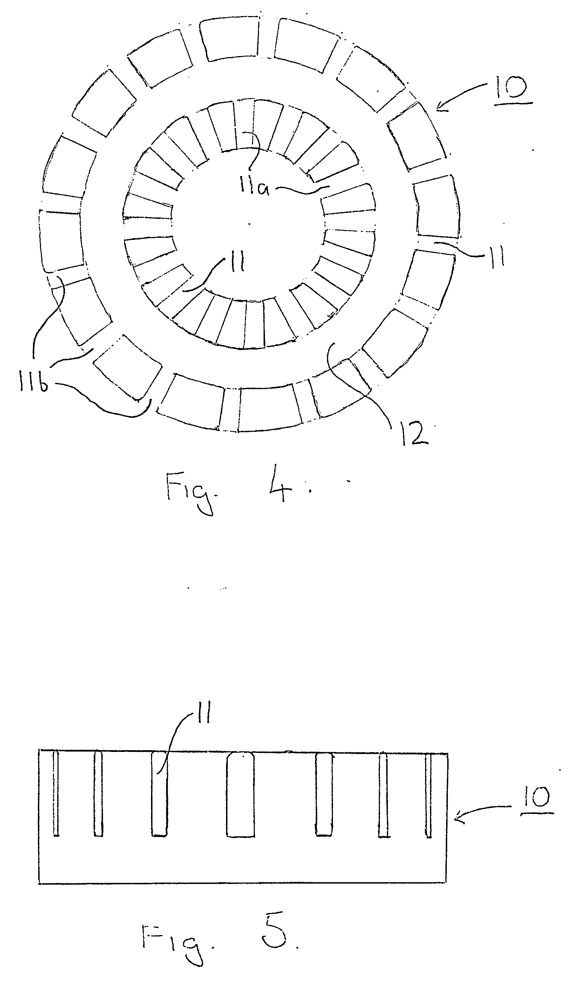

A previously proposed core as illustrated by Figs. 1, 2 and 3 is helically (spirally) wound from electrical strip 1 in which slits or notches 2, opening at one edge of the strip, are punched out at appropriate intervals along the length of the strip. When the strip is wound, to form the core 3, the slits or notches 2 register, in successive turns of the wound coil, to form slots 4 which extend radially of the core.

For use as stator in an axial flux motor, field windings are provided on the core, with radial arms of the field windings located in the slots.

With such a core, either the slots have been narrowed at their mouths, making insertion of the field windings through the mouths into the slots difficult, or, after insertion of the windings, tongues 5 between the slots have been bent inwardly, towards the axis around which the core is wound, to close the mouths of the slots. It is to be understood that in embodiments of the present invention such measures are not required although the mouths of radial slots may advantageously be narrowed to some degree.

Figs. 4 and 5 illustrate in plan and side view a wound-strip magnet core 10 for an electrical machine embodying the present invention. The core is helically (spirally) wound of metal strip (which need not be of electrical steel) which is slit or notched so as to provide radial slots 11 in the wound core. Illustration of the individual turns of the strip in the core is, for convenience and clarity, omitted.

The core is provided also with a circular or annular endless channel or slot 12 extending continuously around the axis of the core, effectively dividing the radial slots into two groups; inner slots 11a and outer slots 11b. To provide channel 12 the strip is reduced in width (continuously notched) over a length equivalent to an appropriate number of turns of the strip in the core 10.

In cores embodying the present invention, more than one channel l2 may be provided, for example two or three, each channel at a different distance from the axis of the core, to provide for example three or more groups of radial slots in the core. The channels may be of different widths and/or depths.

Radial slots of different groups need not lie along the same radii of the core. Neither need they be of equal number. Nor need the slots all be of the same depth. Different slot depths may be provided as appropriate e.g. in accordance with the bulk of the winding or windings parts of which are eventually to be accommodated in the slots. Different slot widths may also be provided. The slots may extend either purely radially of the core or may be slanted or skewed.

It is to be particularly noted that for some purposes cores embodying the present invention need not be provided with radial slots: only one or more endless slots or channels 12, extending continuously around the axis of the core, being provided.

This is so, for example, when windings on the core are required only to provide north and/or south magnetic poles or when a brake is required. The windings may then simply run around the channels.

The provision of one or more channels 12 opens up many possibilities. When radial slots are also provided, different windings (wire coils) can be provided on the core, using for example inner and outer slot groups, which effectively provide different motor configurations.

For example, if the core having one channel 12 is used in a stator of an electric motor, the number and disposition of the outer slots and the coils inserted in the outer slots may be configured for a four pole motor whilst the number and disposition of the inner slots and the coils inserted in the inner slots are configured for a two pole motor. Parts of both the outer and inner coils will of course be carried in the channel 12.

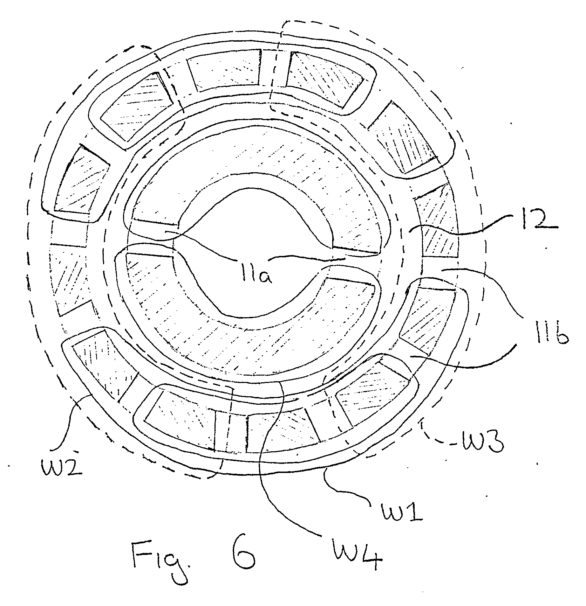

Another possibility, illustrated in Fig. 6, is to provide a two pole motor with an electromagnetic brake. In this case, there are only two inner slots 11a, on opposite radii of the core, whilst there are twelve outer slots 11b. The necessary wire coils, in particular their positioning in the slots and in the channel 12, are schematically illustrated at W1, W2, W3 and W4 in the Figure. The spiral laminations of the wound-strip core are not illustrated in Fig. 6, but for clarity the tongues between the slots are hatched.

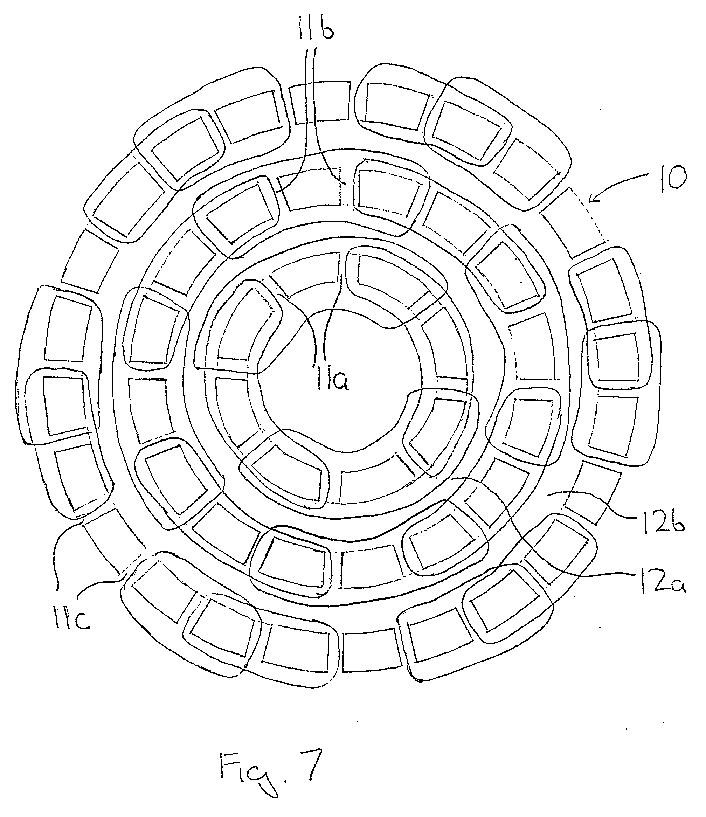

Fig. 7 schematically illustrates another wound-strip core embodying the present invention. The core is wound of strip notched so as to provide in the finished core two annular channels 12a and 12b, affording three sets of radial slots; inner set 11a, middle set 11b and outer set 11c.

Fig. 7 illustrates the number and disposition of slots for providing, for a stator of a motor, a two pole, a four pole and a twelve pole winding configuration, respectively using the inner, middle and outer slots. Suitable wire coil configurations are schematically illustrated in the Figure.

The provision of the different motor configurations enables advantage to be taken of the different characteristics of those configurations in a single motor. For example, one configuration may be used for its high starting torque and another for its high synchronous speed.

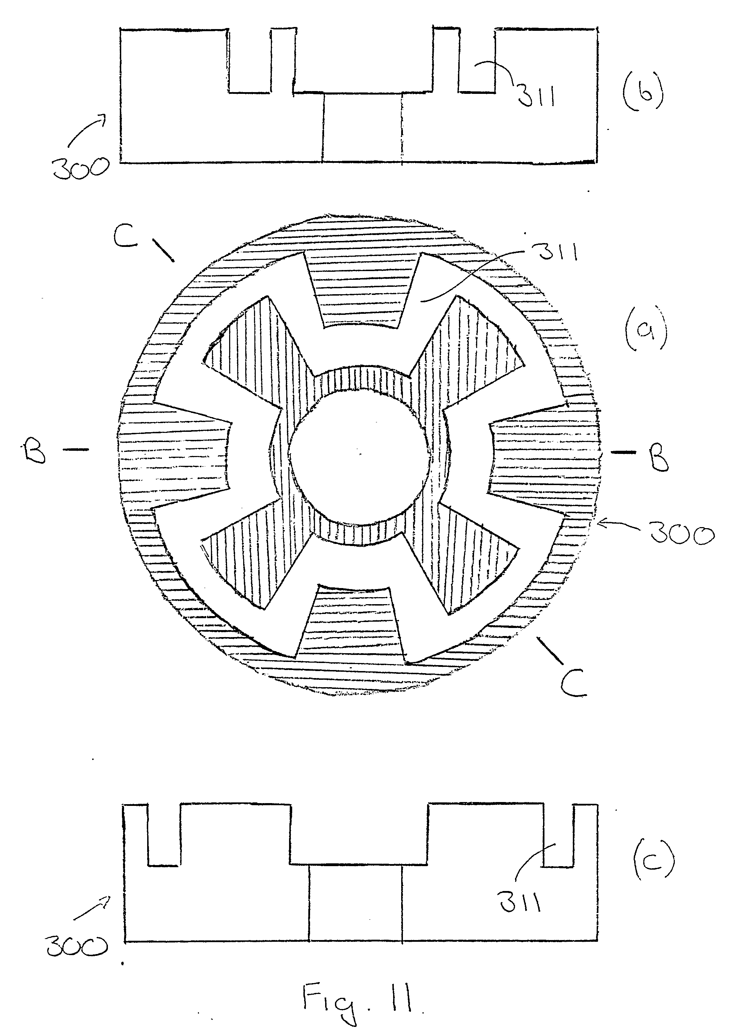

A stator core as illustrated in Fig. 7 may be wound for use in brushless ac or dc motors used as stepping motors or speed controlled motors with single or double stacks with rotors which are magnetic, copper-aluminium or as shown in Fig. 11 below.

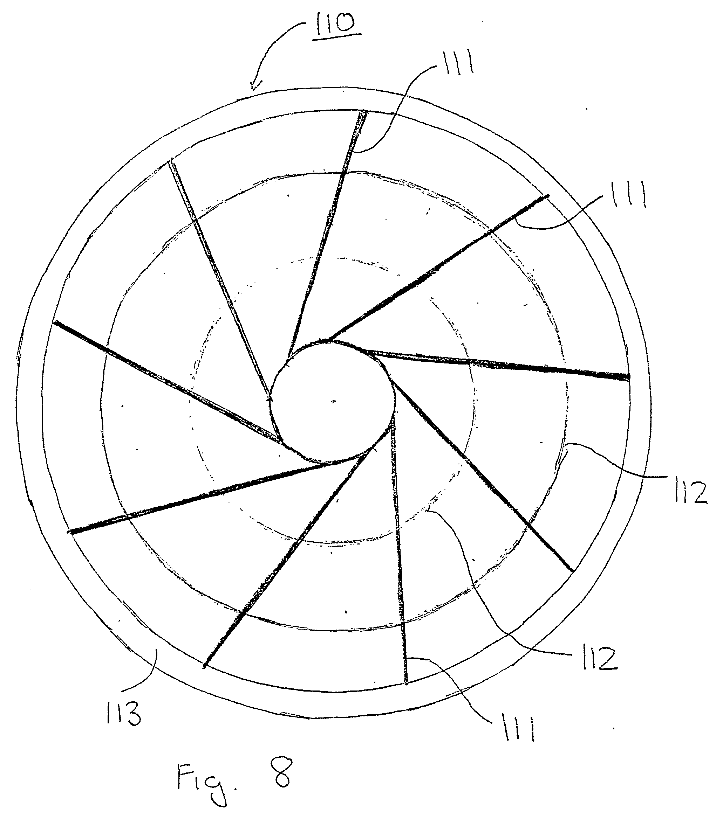

Fig. 8 illustrates the form of a rotor for use for example with stator cores embodying the present invention.

This form of rotor is, like a stator core, made by coiling strip. The strip is provided with slits which, in the wound coil, provide radially extending slots, which may be straight or curved, running for instance along chords of the rotor. The wound-strip coil is cast in metal, for example aluminium, which also fills the slots.

Like the stator, the rotor has a circular channel or channels, in this case filled with the casting metal. The circular channel or channels divide the rotor into concentric rings, in a similar way to that in which the stator is divided.

This division of the rotor into rings, in correspondence to the division of the stator, improves efficiency of operation of the different motor configurations (e.g. two pole, four pole, twelve pole) offered by the stator.

In the rotor 110 illustrated in Fig. 8, ten radial slots 111 are shown, by way of example, with two circular channels 112. The rotor core is embedded in casting metal 113, which also fills the slots and channels, is shown at 113.

Cores embodying the present invention can also be employed in electrical machines other than motors.

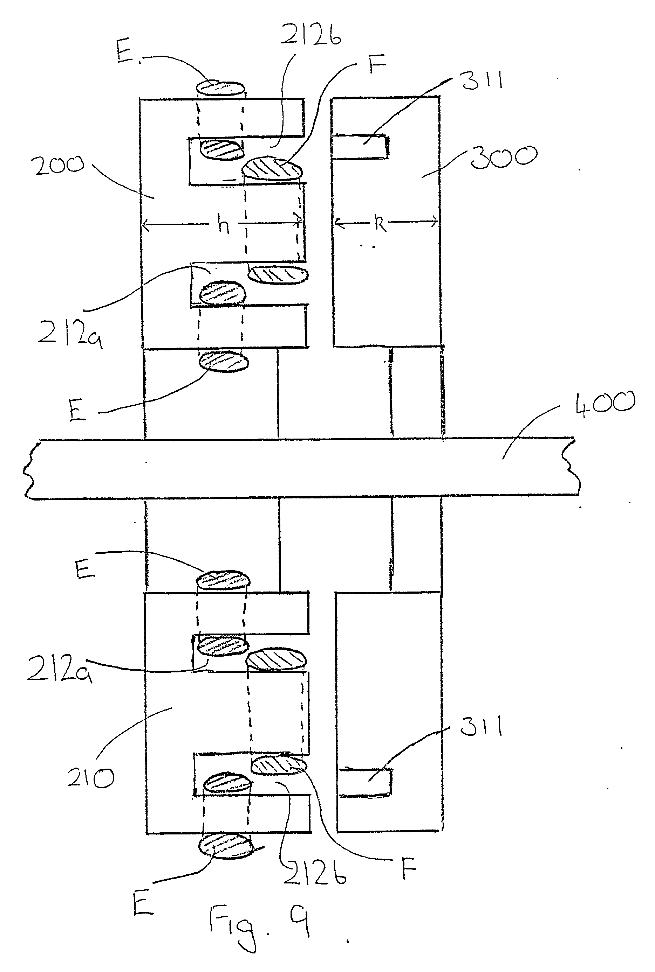

Fig. 9, illustrates an alternator using a core embodying the present invention.

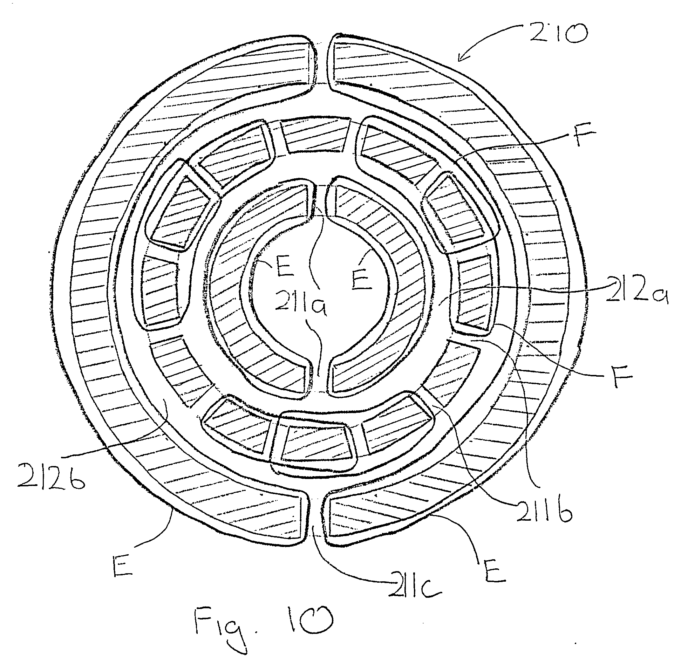

The stator 200 of the alternator has a wound strip core 210 produced of wound strip in the same way as the cores of Figs. 4, 6 and 7. In the stator illustrated in Fig. 10 the radial slots of the core provide two inner slots 211a, twelve middle slots 211b and two outer slots 211c. Two circular channels 212a, 212b are formed in the core. Wire coil configurations are illustrated in Fig. 10 for field and exciting coils F and E. The exciting coils are required in this distribution only on large alternators. For small alternator, delivering up to say 60 amps per hour operating at 6000 r.p.m., a single coil can be used which runs round a channel in the stator core (or around the inner-centre perimeter or around the outer perimeter of the stator).

The rotor 300 of the alternator is also a wound-strip structure, produced in a similar fashion to the core of the stator. In the case of the rotor illustrated in Fig. 11 the strip is slit or notched to provide a configuration as illustrated in Fig. 11, (a), (b) and (c). In the wound rotor, the slits or notches in the strip provide a slot 311 of zig-zag or meander form.

The rotor 300 is mounted for rotation on a spindle 400.

The alternator illustrated in Figs. 9, 10 and 11 can be very compact. For example the dimension h and k in Fig. 9 may be 25 mm and 15 mm, with an air gap of 0.3 mm between rotor and stator.

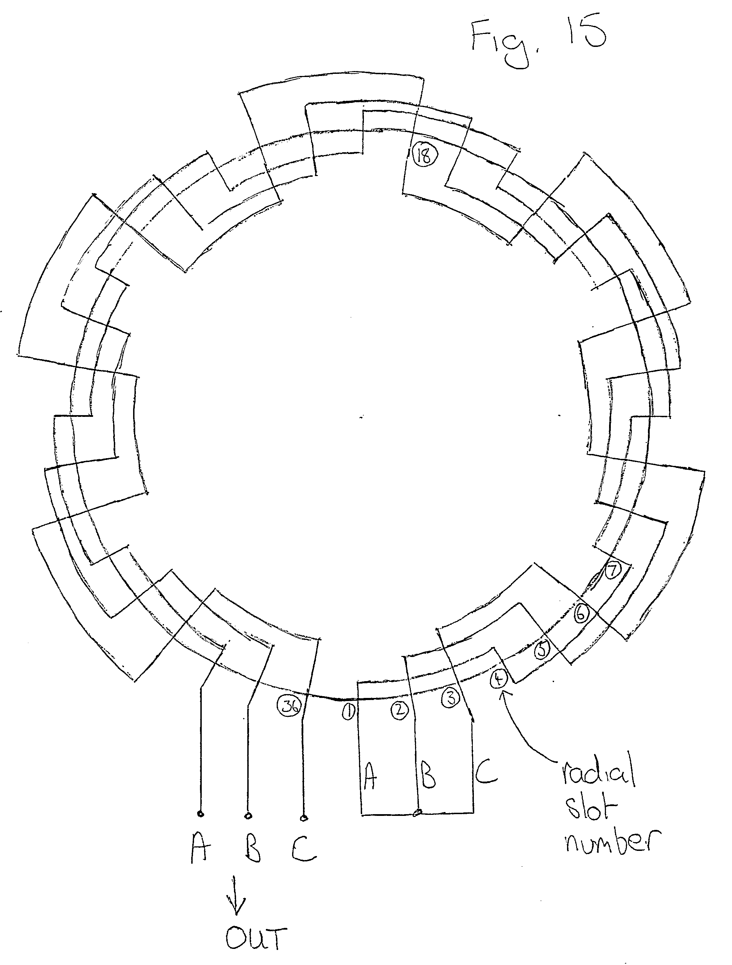

The field coil windings of the stator of a three-phase alternator (e.g. using the channels 212a and 212b and middle radial slots 211b as in Fig. 10) may be as illustrated in Fig. 15 for a three-phase, 6-pole, 18 coil configuration. In this case, of course, 36 middle slots are needed, as illustrated in Fig. 15. The coils are provided by three meander-form windings A, B and C which, as illustrated, are joined together at one end, for example the input end.

The winding configuration of Fig. 15 may be designated as 6-pole,18-coil,1-4 pitch, the latter referring to the radial slot bridging pattern of each meander of the winding.

For a 4-pole,12 coil winding configuration, basic 1-6 pitch is used with 24 radial slots (e.g. 211b). In this case each winding A, B and C employs radial slots as follows (numbering the radial slots one after the other around the stator):-

Winding A : 1-6, 7-12, 13-18,19-24
Winding B : 9-14,15-20, 21-2, 3-8
Winding C : 17-22, 23-4, 5-10, 11-16.

Winding ends of windings A, B and C are taken from slots 25, 8 and 16 are joined together.

Fig. 11 illustrates particularly a 4-pole rotor for a three phase alternator which matches a stator core of the form illustrated in Fig. 10 with a 4-pole winding configuration as described above.

Fig. 12 illustrates schematically a machine in which motor and generator are combined.

The stator of the machine has a wound-strip core 510 with a circular channel 512. Coils carried by the core are indicated by W. The rotor 600 is divided into two parts. One part, for example the inner part 601, being a magnet, which in cooperation with the inner coils on the stator 510, functions as a generator. The other part of the rotor, for example the outer part 602, is of aluminium, or is also a magnet, which in cooperation with the outer coils on the stator functions as a motor.

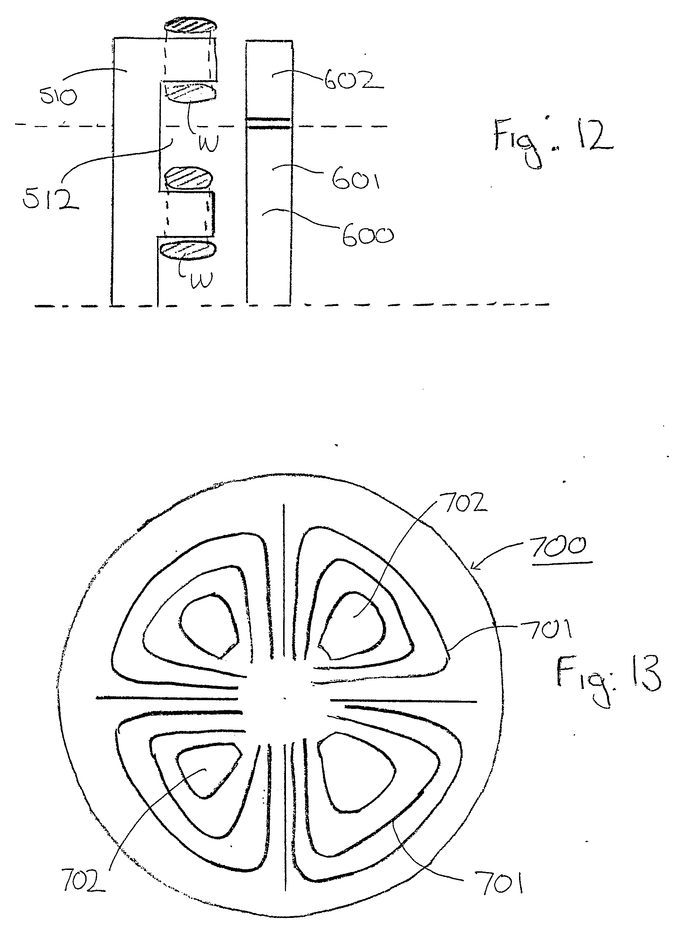

A magnet core embodying the present invention may also be used to provide the stator of an induction motor in which the rotor is a disk of metal sheet, for example copper or aluminium, about 1 mm to 3 mm thick. Such a disk is illustrated at 700 in Fig 13. The disk is cut through to provide slits 701 and apertures 702 of the general pattern indicated.

Such a disk may be located between two facing stator cores with the fields produced by the cores serving to locate the rotor axially and between the cores, in addition to rotating the rotor.

Magnet cores embodying the present invention may also be employed in induction regulators. In such a regulator, the "rotor" is not rotated, merely adjusted in position relative to the stator, to vary the output voltage.

Cores embodying the present invention can also be employed in induction generators.

In general cores embodying the present invention may find application in rotating and stationary electrical machines, for instance induction machines, transformers, generators, alternators and d.c. or a.c. motors, in either rotors or stators.

The cores have the advantage of compactness and ease of manufacture.

Although, in the illustrated embodiments, the non-radial channels 12 in the cores are circular or annular, they need not be so: they may be, for example, octagonal.

Such a non-radial channel should extend continuously around the axis of the core, to form an endless loop or trough around that axis.

In the Figures, the widths and depths of the slots and channels are not to scale; they are shown merely schematically.

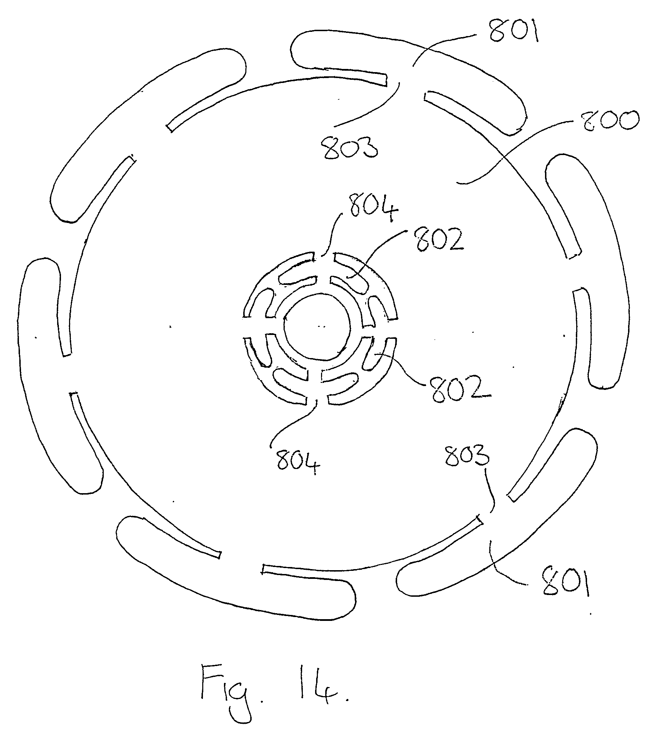

A rotor 800 employed in a rotating machine in accordance with the present invention may be provided with fan blades 801,802 integral with the rotor body, arranged around an external (801) and/or an internal (802) perimeter of the rotor, as illustrated in Fig. 14. Each blade has a stem 803,804 and at least one lobe extending circumferentially of the rotor body, spaced from the perimeter of the rotor.

If the rotor is formed as described with reference to Fig. 8, the fan blades may be cast in a piece with the casting metal holding the rotor core.

If the rotor is of sheet, as described with reference to Fig. 13, the fan blades may be stamped out or cut out as an integral part of the rotor sheet.

Though not visible in Fig. 14, the lobes of the fan blades 801, 802 may advantageously be slightly twisted around the stems 803, 804 attaching them to the body of the rotor.

The fan blades may each have only one lobe, rather than two as shown.

Rotors incorporating fan blades are described in more detail in my co-pending European patent application, filed simultaneously with the present application, entitled "Rotary Fans".

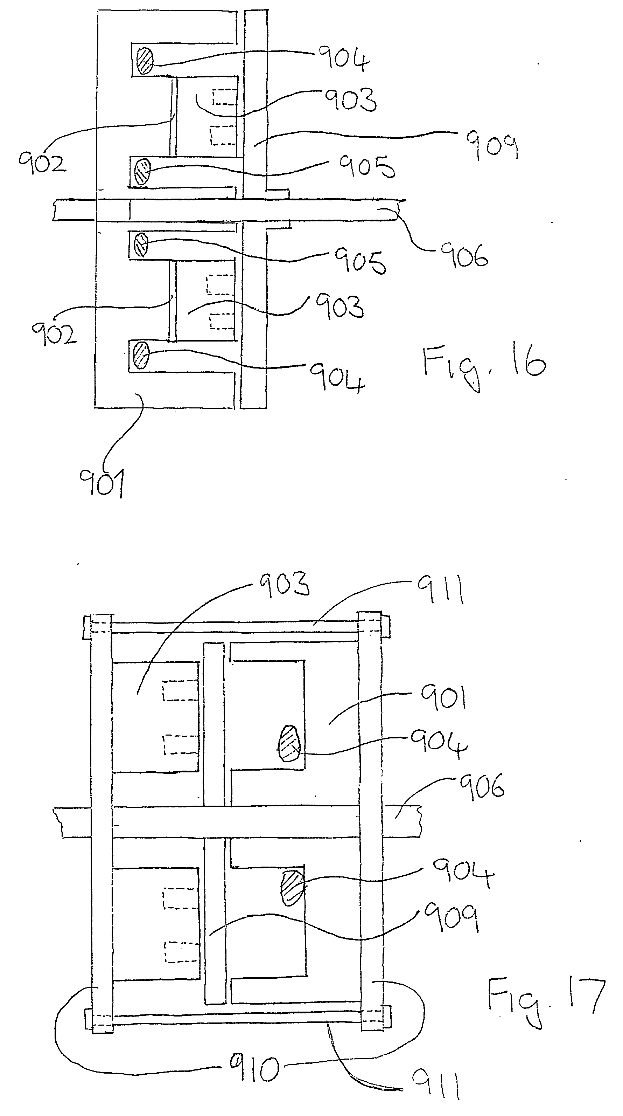

Fig. 16 schematically illustrates an electrical machine (a generator or alternator) having a rotor field transfer housing 901, a stator core 903, isolated from the housing 901 by, for example, a 3 mm thick separator 902 of aluminium or fibre, for suppressing eddy currents. Exciting coils 904 and 905 may be provided as respective circular coils running around channels in the housing 901. Alternatively, exciting coils E as shown in Fig. 9 may be provided with a suitably configured housing. 909 is the rotor of the machine on a rotating spindle 906.

Fig. 17 shows· an alternative configuration in which the rotor field transfer housing 901 is on the opposite side of the rotor 909 from the stator 903. In Fig. 17, end plates 910 are fastened together by suitable means 911.

The stator 903 has a wound-strip core in accordance with an embodiment of the invention, provided with suitable (not illustrated) windings.

The housing 901 may be provided also of wound strip as a core in accordance with an embodiment of the invention. Alternatively, the housing can be made of cast steel very inexpensively. In fact the cheaper is the steel (the poorer quality), the better.

The machine configurations of Figs. 16 and 17 find application particularly in larger or higher speed generators or alternators, or for small scale production.

**Claims**

1. A wound-strip magnet core for an electrical machine, comprising a helically wound coil of metal strip, characterised in that the core has an endless slot extending continuously around the axis of the core.

2. A core as claimed in claim 1, also having generally radially extending slots.

3. A core as claimed in claim 2, wherein different dispositions of and/or different numbers of radial slots are provided radially inwardly and radially outwardly of the endless slot.

4. A core as claimed in claim 1, 2 or 3, having a plurality of endless slots each extending continuously around the axis of the core.

5. A core as claimed in claim 1, 2, 3 or 4, wherein the or each endless slot is annular around the axis of the core.

6. An electrical machine employing a core as claimed in claim 1, 2, 3, 4 or 5, carrying coil windings of the machine.

7. A machine as claimed in claim 6, read as appended directly cr indirectly to claim 2, wherein different coil winding configurations are inserted in different groups of radial slots, respectively located radially inwardly of and radially outwardly of the or an endless slot, the different coil winding configurations using that endless slot in common.

8. A machine as claimed in claim 6 or 7, being a motor the stator of which has a core as claimed in claim 1, 2, 3, 4 or 5, and the rotor of which has a core formed of a wound coil of strip and has generally radially extending slots, wherein the rotor also has at least one additional slot extending continuously around the axis of the rotor, in correspondence to the endless slot or slots of the stator.

9. A machine as claimed in claim 6 or 7, being an alternator, the stator of which has a core as claimed in claim 1, 2, 3, 4 or 5, and the rotor of which is formed of a wound coil of strip and has a continuous slot following a zig-zag or meander form path around the axis of the rotor.

10. A machine as claimed in claim 5 or 6, being an induction motor, the stator of which has a core as claimed in claim 1, 2, 3, 4 or 5, and the rotor of which is formed of a sheet of conductive metal with slits and/or apertures.

11. A machine as claimed in claim 6 or 7, being a motor and a generator, the stator of which has a core as claimed in claim 1, 2, 3, 4 or 5, and the rotor of which has a magnet part, cooperating with a coil winding configuration of one of the groups of radial slots to form a generator, and another part, cooperating with the coil winding configuration of the other group of radial slots to form a motor.

12. A machine as claimed in claim 6 or 7, being a generator or an alternator, having a rotor field transfer housing constituted by a magnet core as claimed in claim 1.

13. A machine as claimed in claim 6 or 7, being a generator or an alternator, having the stator of which has a core as claimed in claim 1, 2, 3, 4 or 5, having a rotor field transfer housing of cast metal.

14. A machine as claimed in any one of claims 6 to 13, having a stator and/or a rotor field transfer housing with a core as claimed in claim 1, 2, 3, 4 or 5, and a rotor having fan blades integral with the body of the rotor, arranged around an external and/or internal perimeter of the rotor, each blade comprising a stem extending radially from the rotor body and at least one lobe extending circumferentially of the rotor body spaced from the perimeter of the rotor.

Fig. 1

Fig. 2

Fig. 3

Fig. 4.

Fig. 5.

Fig. 6

Fig. 7

Fig. 8

Fig. 9

Fig. 10

Fig. 11.

Fig. 12

Fig. 13

Fig. 14.

Fig. 15

A B C

↓

OUT

radial
slot
number

Fig. 16

Fig. 17

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | DE-A-2 844 590 (KGEL) <br> * page 6, paragraphs 3, 4; page 8, paragraph 2; figures 1, 2 * <br> --- | 1,2,5,6 | H 02 K 1/16 <br> H 02 K 19/06 |
| A | GB-A-1 270 591 (STANDARD MAGNET) <br> * page 1, lines 78-82 * <br> ----- | 1,2 | |

TECHNICAL FIELDS SEARCHED (Int. Cl.4)

H 02 K 1/00
H 02 K 19/00

The present search report has been drawn up for all claims

| Place of search | Date of completion of the search | Examiner |
|---|---|---|
| BERLIN | 10-04-1988 | GESSNER E A F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P0401)